(19)

Europäisches
Patentamt

European
Patent Office

Office européen
des brevets

(11) **EP 4 722 696 A1**

(12) **EUROPEAN PATENT APPLICATION**

(43) Date of publication:
**08.04.2026 Bulletin 2026/15**

(21) Application number: **24205032.6**

(22) Date of filing: **07.10.2024**

(51) International Patent Classification (IPC):
**G01N 21/64** $^{(2006.01)}$

(52) Cooperative Patent Classification (CPC):
**G01N 21/6408**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Prospective Instruments GmbH**
  **8105 Regensdorf (CH)**
• **Universität Zürich**
  **8006 Zürich (CH)**

• **Ost - Ostschweizer Fachhochschule**
  **8640 Rapperswil (CH)**

(72) Inventors:
• **Velasquez Moros, Felipe**
  **8048 Zürich (CH)**
• **Ravotto, Luca**
  **8050 Zürich (CH)**
• **Amiet, Dorian**
  **8640 Rapperswil-Jona (CH)**

(74) Representative: **Hepp Wenger Ryffel AG**
  **Friedtalweg 5**
  **9500 Wil (CH)**

(54) **METHOD AND SYSTEM FOR PERFORMING TIME-CORRELATED SINGLE PHOTON COUNTING MEASUREMENTS**

(57) The disclosure pertains to a method of analyzing a time-correlated single photon counting measurement, the method comprising the steps of a) exciting the sample (10) by a plurality of successive excitation light pulses or any other form of periodically modulated light (11), b) detecting the radiation originating from the sample (10), thereby generating an electrical signal (12), out of which at least one detection event (13) is generated, each detection event (13) indicative of at least one photon originating from the sample (10) and having a measured relative time ($t_p$), c) providing extended information for at least one of said detection events (13), preferably for each of said detection events (13), the extended information being representative of at least one of the size and shape of the electrical pulse associated with the detec-

tion event (13) within the electrical signal (12), and d) generating a distribution of relative times reflecting one or more properties of the sample (10) based on said signal (12) and said extended information, wherein a corrected relative time $(t'_p)$ is assigned to at least one detection event (13) which is based on the measured relative time ($t_p$) of the detection event (13) and on the extended information associated with the respective detection event (13) and/or a weight factor (w(t)) is assigned to at least one detection event (13) which is based on the measured relative time ($t_p$) of the detection event (13) and on the extended information associated with a plurality, in particular all, detection events (13) within a domain of interest (DOI).

Fig. 7

**Description**

The present invention relates to methods and systems for performing time-correlated single photon counting measurements.

In the context of scientific measurements based on fluorescence, various techniques can be employed, including but not limited to spectroscopic measurements using solutions in cuvettes, fluorescence microscopy in all its flavors, fiber photometry, and flow cytometry. These experiments make use of instrumentations comprising some main elements:

- an excitation source, for example a lamp, a laser, or an LED used to excite a sample;

- excitation and detection optics;

- detectors to produce an electrical response upon detection of light, in particular a current or a voltage);

- detection electronics, to measure the electrical signal from the detector and transform it into digital data suitable for further analysis;

- control software.

The detection and quantification of photons can be performed using two main techniques: analog integration and single-photon counting:

Analog integration is based on the quantification of the electrical signal produced by a detector in a certain interval of time, which is proportional to the number of detected photons.

Single-Photon Counting (SPC) is based on the measurement of fast electrical pulses produced every time a single photon hits a suitable detector. The technique detects the moment in time in which the electrical pulse crosses a predefined threshold and assigns a time stamp (hereinafter called "absolute time") to the electrical pulse (and therefore one or more detected photons), corresponding to its arrival time from the start of the experiment, and deduces the intensity of light hitting the detector by counting the total number of electrical pulses (and therefore one more photons) detected in a certain time interval.

SPC offers superior noise performance with respect to analog integration, due to the absence of background analog electronic noise. Moreover, SPC can be used to gather additional information rather than the intensity of light alone. In particular, when a periodically modulated (e.g. pulsed) excitation source is used, the time between the excitation event and the detection of a photon generated due to such excitation (hereinafter called "relative time") can be measured using a reference signal that is produced in a synchronized fashion with respect to the temporal profile of the excitation source. This method is called Time-Correlated Single-Photon Counting (TCSPC) and is used in techniques such as time resolved Fluorescence Spectroscopy, Fluorescence Lifetime Imaging (FLIM), Fluorescence Lifetime Fiber Photometry (FLIP), and in other technological applications.

Lifetime-based techniques are particularly advantageous in comparison to intensity-based ones as they offer additional information to separate different components of a mixture of fluorescent species, and they are not dependent on the total number of detected photons (above a minimal signal-to-noise ratio threshold), offering robust quantitative readout in the presence of intensity losses due to scattering or absorption, as typical of many in vivo and ex vivo biological measurements.

Besides fluorescence techniques, TCSPC is a general method for the detection of photons referenced to a synchronization signal (usually the emission of light from a laser source) and extends, for example, to techniques that measure the same light emitted from the laser source (e.g. optical tomography or LIDAR ranging) .

Modern TCSPC measurements utilize a detection strategy named Time-Tagged Time-Resolved (TTTR) detection that could include one or more of the following steps:

1. A pulsed excitation light or any other form of periodically modulated light is used to illuminate the sample.

2. The excitation instrument, or another suitable instrument, transmits an electrical signal (comprising, in particular, pulses, periodic waves or other) that reports on the periodicity of the excitation source (the synchronization signal).

3. An electronic device records the synchronization signal, extracts the time of each excitation event (the Excitation Time) and optionally increases a counter of the total number of excitation events (Excitation Event Number). Each excitation event corresponds to the emission of an optical pulse from the light source or to a predetermined value of a periodically modulated excitation light intensity. The temporal interval between two adjacent excitation events is defined as Excitation Cycle.

4. The light emitted (fluorescence) or scattered (tomography, LIDAR) by the sample is collected by one or more suitable photodetectors, which produce an electrical pulse every time a photon is detected.

5. Each photodetector produces a constant baseline electrical signal (current or voltage) possibly comprising analog noise, and electrical pulses of predefined size and shape (with variability on those parameters dependent on detector technology) every time a photon is detected. Electrical pulses generated by the detection of a single photon are defined as Single Photon Response (SPR) of the detector. A generic electrical pulse can be composed of one or more SPRs.

6. The electrical signal from the detector(s) is transmitted to the electronic device as described in item 3 above.

7. A predefined criterion, such as the signal crossing a predefined intensity threshold, is used to determine when the detector has received a photon.

8. The electronic device records a detection event with the following information:

   a. Absolute Time: time between the start of the experiment and the crossing of the threshold by the electrical signal.

   b. Relative Time: time between the latest Excitation Time and the crossing of the threshold by the electrical signal.

Alternatively, the Excitation Time or the Excitation Event Number can be recorded, and the Absolute Time reconstructed during data analysis from those values and the Relative Time.

9. The information on the collected detection events is transmitted to a computer.

10. A temporal distribution of the detected photons (e.g. fluorescence decay for FLIM) is assembled by composing a histogram where each detection event contributes to the intensity value of a discrete temporal bin that corresponds to its relative time.

In practical implementations, TCSPC suffers from specific artifacts that may distort the final temporal distribution of photons, such as:

- Classic Pile-up: In classic TCSPC (not using the TTTR method), sampling of the exciting laser beam initiates a voltage ramp that is interrupted as soon as a photon has been detected. The voltage value is correlated with the time spent between the excitation and detection events, and after multiple excitation cycles, a histogram of the distribution of relative times can be composed. If more than one photon arrives at the detector within one single laser cycle, any photon after the first is discarded.

- Dead time (DT): Either the detector or the electronics remain "blind" for a certain amount of time after the detection of a photon, preventing the correct detection of other photons arriving in close time proximity.

- Pile-up (PU): In modern systems using the TTTR method, classical pile-up is avoided. However, when two or more photons arrive on the detector in close time proximity, the generated electrical pulse (composed of the sum of the individual SPRs), might be counted as a single photon event in the photon counting electronics.

To avoid these distortions, experiments are traditionally conducted at photon count rates roughly below 1-5% of the laser excitation rate. However, even when using high-repetition rate lasers (for example 40-80 MHz), the total number of collected photons is limited to a few million counts per seconds (Mcps, also corresponding to counts per microsecond). While this count rate might be appropriate for some applications, in others, such as fluorescence lifetime imaging, it is strongly limiting in terms of accuracy and/or acquisition speed. While the exact values depend on many factors, a typical FLIM image collected in these conditions might require an acquisition time in the order of minutes to be suitable for accurate analysis.

Thus, increasing the count rate in TCSPC while avoiding distortion has become a primary goal in modern TCSPC.

While DT remains a problem for certain detection technologies, such as individual Single-Photon Avalanche Photodiode (SPAD) detectors, systems like photomultipliers (PMTs), hybrid photodetectors (HPDs), large SPAD arrays, and silicon photomultipliers (SiPMs) are virtually free of detector DT. With the progress in fast Time-to-Digital Converters (TDCs) and Analog-to-Digital Converters (ADCs), the electronics DT has also been shrunk to sub-ns levels or fully suppressed, de facto eliminating its contribution as well.

Thus, pile-up remains the main obstacle to achieving undistorted TCSPC at high count rate. As of today, the most advanced TCSPC instruments use a threshold-based method to assign the time of arrival of a photon. When an electrical pulse produced by the detector crosses a certain threshold, the time stamp is assigned. When the electrical signal drops below the threshold again, the system is ready to measure a new pulse. If a new pulse arrives before the first one has fallen again below the threshold, the second one cannot be detected, causing the distortion of the decay due to a lack of appropriate pulse resolution.

The smaller the full width at half maximum (FWHM) of the electrical pulse generated when the photon hits the detector, the higher will be the pulse resolution power of the electronics. Due to their very sharp (sub-ns FWHM) pulses and low noise, HPDs are the gold standard in the field and the de facto technology for FLIM.

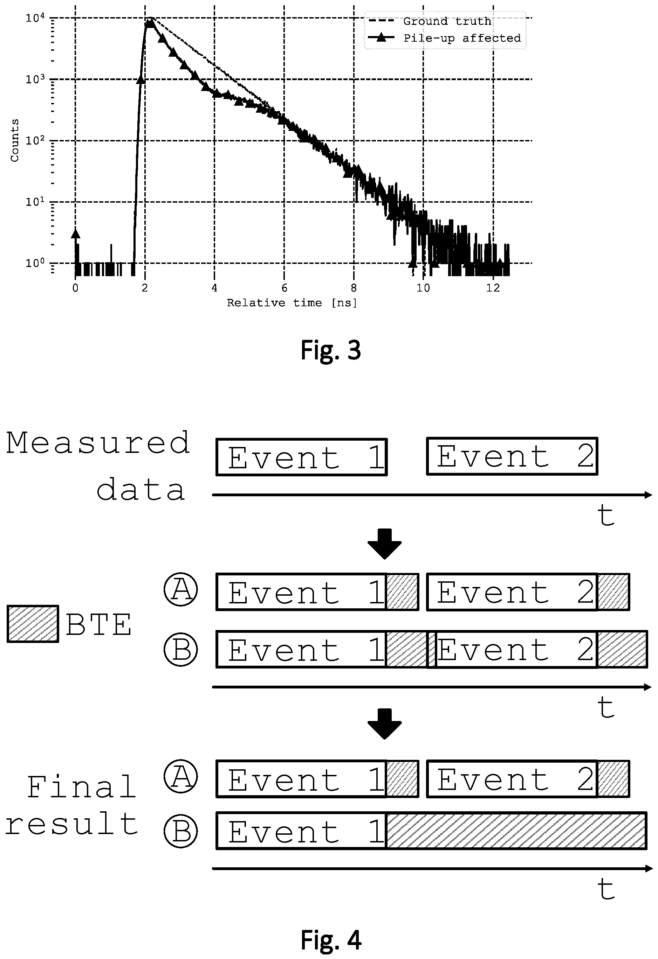

Even using state-of-the-art electronics and detectors, the effect of pile-up is still important, and even if detection rates around 80-100 Mcps have been demonstrated, the resulting decays are heavily distorted, as can be seen in the example in Figure 3. To add to the complexity of the problem, the degree of distortion depends on the fluorescence lifetime and laser repetition rate.

To overcome this problem in FLIM, two different approaches have been developed:

- A posteriori modelling: Based on analytical equations, it is possible to introduce parameters that account for the pile-up effect in an exponential fitting equation, thus in principle retrieving the correct results. However, this approach works only for fitting analysis which, while being the most information-preserving one, is also more sensitive to noise than alternative estimation methods. Moreover, the total number of detected photons is underestimated in a sample-dependent way, preventing accurate intensity measurements.

- High speed FLIM filter: By using ADCs, it is possible to obtain information about the total number of photons per excitation cycle by integration rather than counting. In this way it is possible to remove from the photon counting analysis all excitation cycles (defined as the time between two consecutive excitation events) that contain more than one photon, thus effectively eliminating distortions. However, this technique discards a progressively large fraction of detected photons at progressively higher detection rates, limiting its ability to improve signal-to-noise ratio.

While no other approach has been reported to the best of the inventors' knowledge to solve the pile-up problem, two interesting methods have been presented for the control and correction of detector dead time in single SPAD detectors, here defined as Matched Dead Time (MDT) and SPAD Dead Time Correction (SDTC):

- MDT: By adjusting the active quenching circuit of the SPAD detector, is it possible to set the dead time to be equal to the excitation period (i.e., the time between two consecutive excitation events). Under this condition, a certain percentage of photons are discarded, but the fluorescence decay is undistorted.

- SDTC: By measuring the behavior of the active quenching circuit, it is possible to prepare a second temporal histogram (having the same time scale as the relative time histogram) reflecting the "state of the detector" that can be used to correct the decay. This is the only reported method to correct both the decay and the total intensity (except for added statistical noise in certain areas of the decay) but can be used only with a specially designed SPAD detector.

Importantly, SPAD detectors have active areas that are significantly smaller than HPDs or SiPMs, preventing their use in highly scattering samples, which prevents tight focusing of the light collected by an objective.

In view of the disadvantages inherent in the prior art, it is an object of the present invention to provide a method for performing time-correlated single photon counting measurements in which distortions (in intensity and/or shape) of the distribution of relative times can be reduced. In particular, this method should allow the use of standard commercial detectors such as HPDs, SiPMs, PMTs, etc.

This and further objects are obtained by a method for performing time-correlated single photon counting measurements that comprises the steps of

a) exciting a sample by a plurality of successive excitation events, in particular successive excitation light pulses or any other form of periodically modulated light,

b) detecting the generated radiation (fluorescence or scattering), thereby generating an electrical signal, out of which at least one detection event is generated, each detection event comprising at least one electrical pulse indicative of at least one photon originating from the sample and having a measured relative time,

c) providing extended information for at least one of said detection events, preferably for each of said detection events, the extended information being representative of at least one of the size and shape of the electrical pulse within the detection event, and

d) generating a distribution of relative times reflecting one or more properties of the sample based on at least one detection event and said extended information, wherein,

- at least one detection event is disregarded based on the measured absolute time, relative time, and/or extended information associated with one or more of the detection events within a domain of interest and/or

- a corrected relative time is assigned to at least one detection event which is based on the measured relative time of the detection event and on the extended information associated with the respective detection event and/or

- a weight factor is assigned to at least one detection event which is based on the measured relative time of the detection event and on the extended information associated with a plurality, in particular all, detected detection events within a domain of interest.

The excitation light pulses or the periodically modulated light may be produced by a laser source.

In the context of the present application, an electrical signal is to be understood as a time-dependent electrical signal that is obtained, in particular from the detector, within the domain of interest. The signal may be an electric signal, such as a voltage or an electric current. The detection of the electrical pulse occurs by measuring whether the signal crosses a predefined intensity threshold in a predefined direction (either upwards or downwards, depending on whether the photon detection produces positive or negative electrical pulses), and the time of such crossing is defined as the time of the detection event. The detection event terminates once the signal crosses the threshold in the opposite direction as the crossing that determined the detection event itself. Each excitation event may result in zero, one, or more than one detection event. The measured relative time is the measured time between the excitation event and the time of the detection event. Examples of the extended information will be provided below. A domain of interest may encompass a time of interest or a time of interest and optionally a location of interest.

As could be shown by the inventors, the method according to the invention allows to compensate distortions of the distribution of relative times in intensity and/or shape. It is thus possible to determine accurate distributions at high detected light intensities.

The method may comprise at least one step in which distortions of the distribution arising from deviations of an electrical pulse generated by the detection of a single photon from an imaginary perfect square pulse are corrected.

In particular, by iteration over at least one, in particular all, $N$ detection events $p \in \mathcal{P} = \{p_1, ..., p_N\}$ within the domain of interest, a subset $\mathcal{P}' = \{p'_1, ..., p'_M\}$ of all detection events $\mathcal{P}$ is determined, and corrected blind times $BT_{p1}, ..., BT_{pM}$ are calculated by the following Algorithm 1:

$$j = 1$$

$$p'_j = p_1$$

$$BT_{p_j'} = PW_{p_1} + BTE$$

For all $i \in [2, N]$:

If $T_{p_i} < T_{p_j'} + BT_{p_j'}$: (Case B)

Set $BT_{p_j'}$ to $T_{p_i} + PW_{p_i} + BTE - T_{p_j'}$

Else: (Case A

Add 1 to $j$

$$p_j' = p_i$$

$$BT_{p_j'} = PW_{p_i} + BTE$$

Here, $T_{pi}$ is the absolute time of the detection event $p_i$ from the start of the experiment, obtained by combining the time of the last excitation event before the detection event and the relative time of the detection event. $PW_j$ is the pulse width of the $j$-th detection event, and $BTE$ is a predefined blind time extension parameter. The above step is referred to as Artificial Blind Time (ABT) Algorithm. The measured data (e.g. an Event 1 and an Event 2), the calculation for the two different cases A and B and the resulting final result for the two cases A and B are schematically shown in Fig. 4.

The method may comprise at least one step in which distortions arising from a photon pile-up are corrected.

This may be achieved by calculating a blind time compensation weight $w(t_i)$ for each discrete relative time bin $t_i \forall i \in [1, N_{bins}]$ as

$$w(t_i) = \frac{N_{\text{total}}}{N_{\text{total}} - N_{\text{dead}}(t_i)},$$

wherein $N_{\text{total}}$ is the total number of excitations cycles within a domain of interest DOI and $N_{\text{dead}}(t_i)$ is the number of excitation cycles within the domain of interest DOI where the relative time bin t was within a blind time period $BT_p$, and $N_{bins}$ is the number of discrete time bins within an excitation cycle. This step is referred to as Blind Time Compensation (BTC).

The weights may be used for generating the distribution of relative times. Instead of adding a discrete count for each photon $p$ in the histogram, the weight $w(t)$ is added. This adjusts the contribution of each photon to compensate for the probability of being able to detect a photon with that relative time.

The above-mentioned number of excitation cycles $N_{\text{dead}}(t)$ can be calculated by the following Algorithm 2:

Initialize $N_{\text{dead}}$ at 0 for all $t \in [0, T_{\text{las}})$

For all $i \in [1, M]$:

For all $t$ in range $[t_{p_i}, t_{p_i} + BT_{p_i}]$:

If $t \geq T_{\text{las}}$

$$t = t - T_{\text{las}}$$

Increment $N_{\text{dead}}(t)$ by 1

Here, $T_{\text{las}}$ denotes the excitation period.

For each detection event $p_i \in \mathcal{P}'$, a corrected relative time $t_{p_i}'$ may be calculated as

$$t'_{p_i} = t_{p_i} + f_{\text{RTC}}(p_i),$$

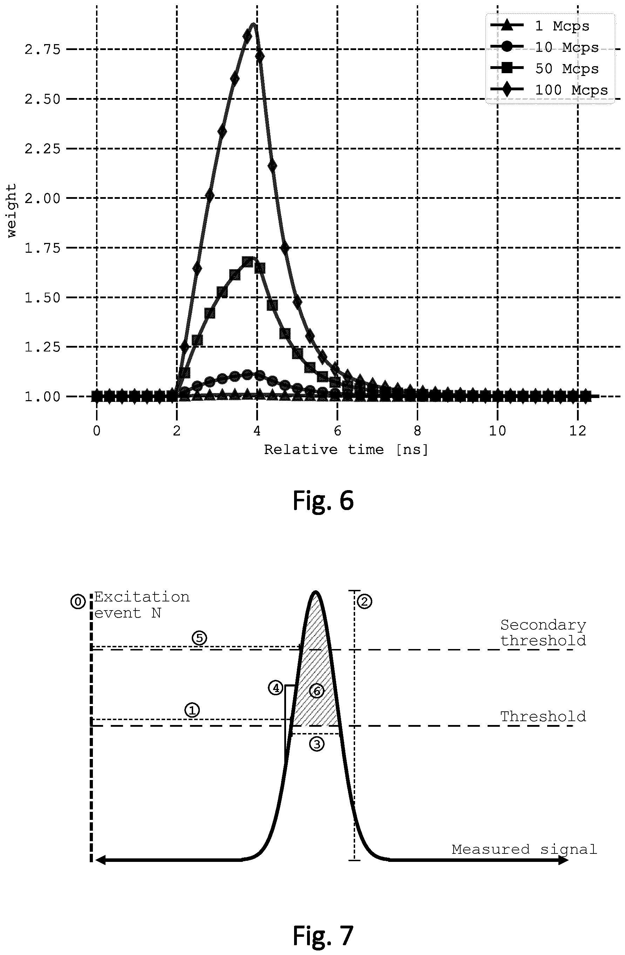

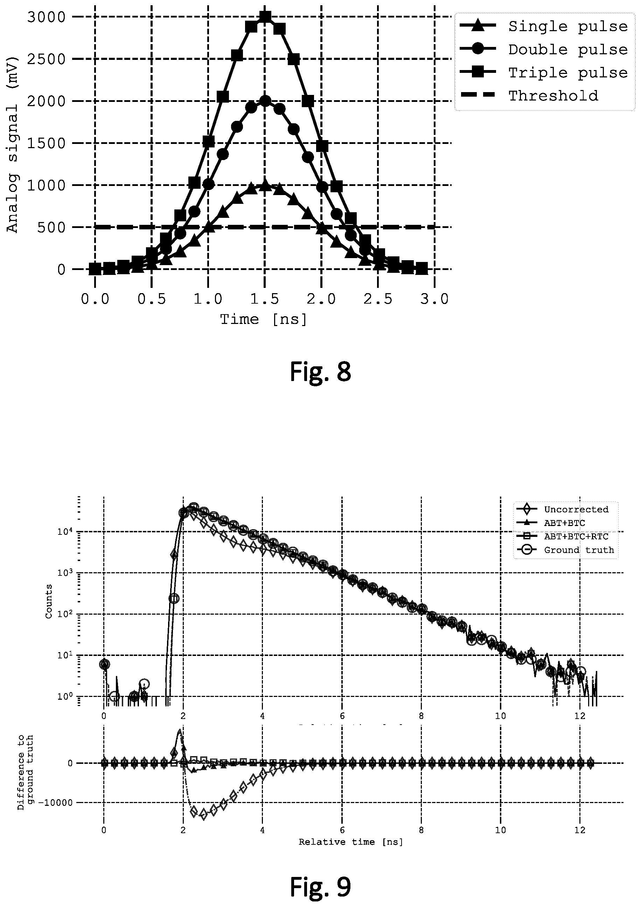

wherein $f_{\text{RTC}}(p_i)$ is a correction function aiming at correcting the apparent difference in relative time of detection events featuring different size and/or shape of their associated electrical pulse (see Figure 8). RTC stands for Rising Time Compensation. $f_{\text{RTC}}(p_i)$ can assume any suitable mathematical form, contain any suitable number of correction constants, and depend on at least one pulse parameter, in particular at least one pulse parameter of the electric signal (see Figure 7) selected from the group consisting of

- a width of the electrical pulse associated with a detection event from a first time of crossing a threshold in a first direction to a later second time of crossing the threshold in an opposite second direction,

- a slope of the electrical signal at a first time of crossing a threshold in a first direction,

- a slope of the electrical signal at a later second time of crossing the threshold in an opposite second direction,

- a maximum or minimum of the electrical signal at a time interval associated with the detection event,

- a maximum or minimum of the electrical signal within a predefined duration from a threshold crossing,

- an area defined by the electrical signal at a time interval associated with the detection event within a predefined duration from a threshold crossing,

- at least one, in particular a plurality of, values of the electrical signal at predefined time intervals before and/or after a threshold crossing,

- at least one, in particular a plurality of, crossing times and/or widths determined at secondary threshold level,

- a time between an excitation event and a secondary threshold crossing.

In one example,

$$f_{\text{RTC}}(p_i) = f_{\text{RTC,H}}(p_i) = c_{\text{H}} \cdot \left(H_{p_i} - V_{\text{thresh}}\right)$$

may be used as correction function, wherein $c_{\text{h}}$ is a predefined correction constant, $H_{pi}$ is a pulse height, and $V_{\text{thresh}}$ is a predefined threshold voltage.

As alternative examples,

$$f_{RTC,S}(p_i, \Delta t) = c_S(\Delta t) \cdot \left(V_{p_i}(t_{thresh} + \Delta t) - V_{thresh}\right)$$

or

$$f_{RTC,A}(p_i, \Delta t) = c_A(\Delta t) \cdot \left(\sum_{t=0}^{\Delta t}\left(V_{p_i}(t_{thresh} + t) - V_{thresh}\right)\right)$$

may be used as correction function.

A histogram of the distribution of relative times (see Figure 9) may be calculated as follows:

```
Algorithm 2a
```

Initialize the temporal dis-
tribution $d$ at 0 for all $t$

for all detection events $p_i$ in
$P'$:

Increment $d\left(t'_{p_i}\right)$ by $w\left(t_{p_i}\right)$

Alternatively, a histogram of the distribution of relative times may be calculated as follows:

```
Algorithm 2b
```

Initialize the temporal dis-
tribution $d$ at 0 for all $t$

for all detection events $p_i$ in
$P'$:

Increment $d\left(t'_{p_i}\right)$ by $w\left(t'_{p_i}\right)$

The method may comprise at least one step in which distortions of the distribution arising from a photon pile-up and/or from deviations of a one-photon detection event from an imaginary perfect square pulse are corrected.

In particular, by iteration over at least one, in particular all, $N$ detection events $p \in \mathcal{P} = \{p_1, ..., p_N\}$ within the domain of interest, a subset $\mathcal{P}' = \{p'_1, ..., p'_M\}$ of all detection events P is determined by selecting only events that correspond to an excitation period where only a single photon reached the detector. This selection is performed by applying Algorithm 3:

$$C_k = 0 \; \forall \; k \in [1, N_{\text{total}}]$$

For all $i \in [1, N]$:

$$k = n_{p_i}$$

Increase $C_k$ by 1

For all $i \in [1, N]$:

$$k = n_{p_i}$$

If $C_k = 1$ and $PW_{p_i} < PWL$:

$$p'_j = p_i$$

Add 1 to $j$

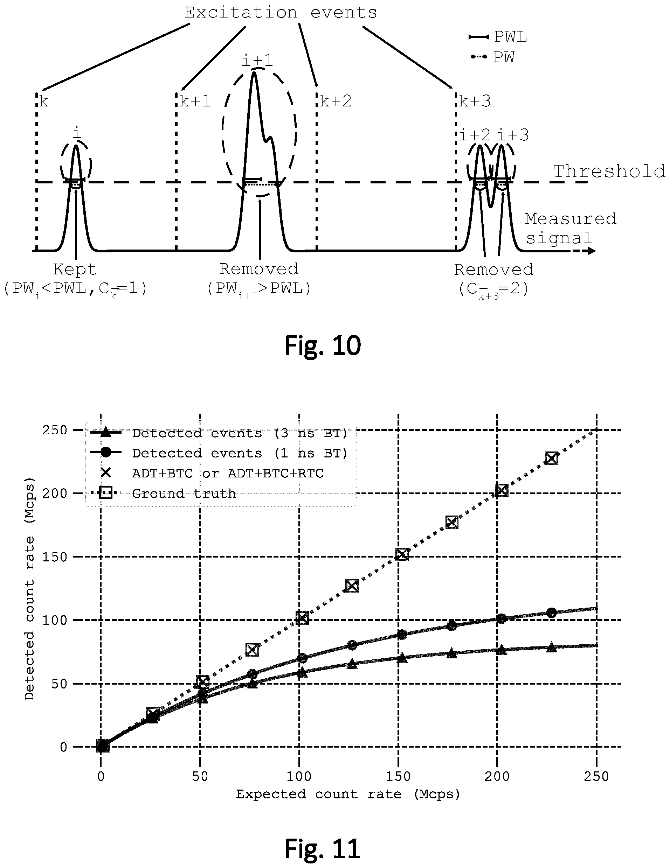

Here, $N_{\text{total}}$ is the total number of excitations cycles within a domain of interest DOI, $n_{pi} \in [1, N_{\text{total}}]$ is the index of the excitation cycle in which detection event $p_i$ was recorded, $PWL$ is a predetermined parameter that specifies the maximum pulse width for a detection event to be classified as a single photon response and $C_k$ results as a list of number of detection events for each excitation cycle. For this correction, the temporal distribution histogram is computed as a standard histogram for all events in $\mathcal{P}'$ . The method described above is referred to as the multi-photon filtering (MPF) approach (Figure 10).

*BTE* is a parameter that depends on the pulse shape and a predefined threshold. Therefore, it can be estimated from the single photon response and/or calibration data.

Alternatively, one can estimate a functional *BTE* value by computing the mean squared error (MSE) between the area-normalized temporal distributions at different values of *BTE* and an area-normalized undistorted reference temporal distribution.

The correction function may be determined on the basis of calibration data.

To obtain an undistorted reference temporal distribution, one may perform a second measurement with the same sample under experimental conditions that ensure the same shape of the temporal distribution in the absence of pile-up effects, while keeping the detected photon flux at a level in which the effect of pile-up is negligible. Alternatively, one may obtain a reference temporal distribution by applying any other correction method, such as discarding all excitation cycles containing more than one photon event (as determined by signal integration or any other method).

Since the shape of the temporal distribution obtained with the proposed correction method depends both on parameter *BTE* and any parameters of the correction function $f_{\text{RTC}}(p)$, it is preferred that an algorithm is implemented that optimizes all parameters.

It is preferred to use the following procedure:

1. Estimate a conservatively large value of *BTE*, using the method described above based on the known pulse shape (or any other value of conservatively large *BTE*).
2. Minimize the mean square error (MSE) between the area-normalized corrected temporal distribution and an area-normalized undistorted reference temporal distribution using the conservatively large value of *BTE* and optimizing the parameters of $f_{\text{RTC}}(p)$. In the above example, the value of a single constant $c_{\text{h}}$ may be determined due to the choice of using $f_{\text{RTC,H}}(p)$. However, any other method for estimating any number of correction constants may be employed, depending on the mathematical form of $f_{\text{RTC}}(p)$.
3. Minimize the MSE between the area-normalized corrected temporal distribution and an area-normalized undistorted reference temporal distribution using the optimized form of $f_{\text{RTC}}(p)$ and optimizing the value of *BTE*.

Following this method, in the above example where $f_{\text{RTC}}(p)$ has been defined as

$$f_{\text{RTC,H}}(p) = c_{\text{h}} \cdot \left( H_p - V_{\text{thresh}} \right),$$

one may first determine $c_h$ using a conservatively large value for *BTE.* Successively, a one-dimensional parameter sweep may be performed to identify an optimized value $c_h$.

After having determined an optimized value of $c_h$, one may perform an analogous procedure to determine an optimized value of *BTE.*

The present invention also pertains to a system for carrying out the method. The system comprises

- at least one excitation source, in particular a laser, for exciting a sample,

- preferably excitation and detection optics,

- at least one detector for detecting the radiation emitted or scattered by the sample and generating an electrical signal, out of which at least one detection event is generated, each detection event comprising at least one electrical pulse being indicative of at least one photon originating from the sample and having a measured relative time,

- at least one first computation unit for providing extended information for at least one of said detection events, preferably for each of said detection events, the extended information being representative of at least one of the size and shape of the electrical pulse within the detection event,

- at least one second computation unit for generating a distribution of relative times reflecting one or more properties of the sample based on at least one detection event and said extended information.

The first and the second computation unit may coincide.

As above, the first and/or the second computation unit may

- assign a corrected relative time to at least one detection event which is based on the measured relative time of the detection event and on the extended information associated with the respective detection event and/or

- assign a weight factor to at least one detection event which is based on the measured relative time of the detection event and on the extended information associated with a plurality, in particular all, detected detection events within a domain of interest.

In order to demonstrate the advantages of the present invention, simulations of fluorescence decays featuring a 1 ns fluorescence lifetime with a 100 Mcps incident count rate were performed. The single photon response used in the simulation follows a Gaussian shape with a FWHM of 1 ns as shown in Figure 8. The number of photons in the simulation is approximately 1 million, wherein variations are due to the random nature of the simulation. The proposed method is able to correctly retrieve both the intensity (Figure 11) and lifetime (Figure 12) information with a high degree of accuracy.

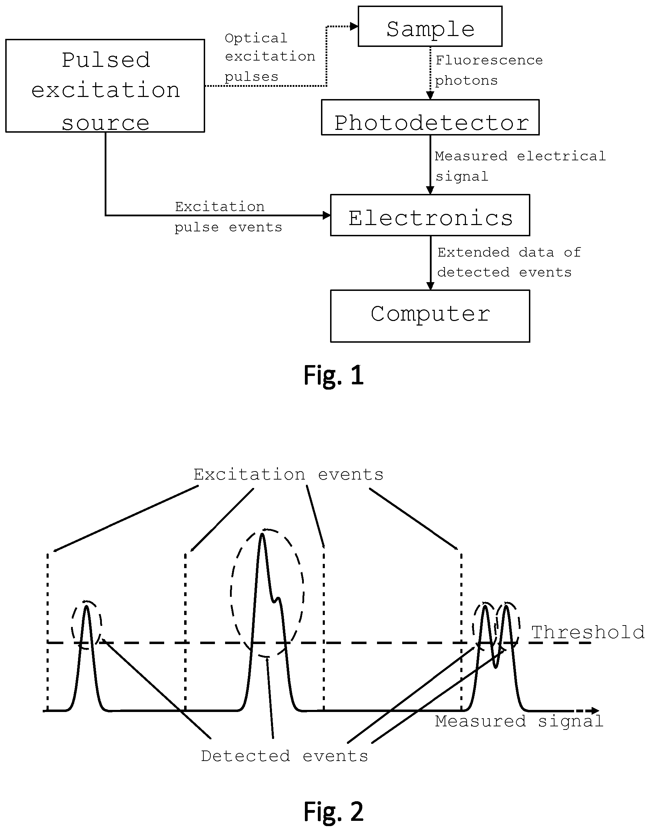

Figure 1 shows an exemplary embodiment of a system 50 for carrying out the method. Such a system comprises an electronic device capable of measuring an electronic signal originating from a detector, detect electronic pulses and assign to each detected event:

- a relative time,

- an absolute time, or in alternative a value of an excitation event number,

- one or more of any of the extended information mentioned above, as for example a width of the detection event from a first time of crossing a threshold in a first direction to a later second time of crossing the threshold in an opposite second direction, a slope of the electrical signal at a first time of crossing a threshold in a first direction, a slope of the electrical signal at a later second time of crossing the threshold in an opposite second direction, etc.

Such system 50 is able to produce a data stream of information about temporally ordered detected events, possibly including additional events not originating from detected photons, and transmit it to an external computer.

Figure 2 shows a typical electronic signal originating from the detector, with electrical pulses composed of one or multiple single photons responses. The times of detection of the excitation events are indicated as vertical dashed lines.

Figure 3 depicts the distribution of relative times of fluorescence photons calculated using simulated detection events in absence (ground truth) or presence of pile-up distortions.

In Figure 4, it is demonstrated why a blind time is preferably extended when an event is removed from consideration. Case (A) shows the result of adding a blind time shorter than the separa-

tion between any two events while (B) shows the result of a second event (event 2) falling within the added blind time of a previous event (event 1). The result for case (B) shows how the total blind time for event 1 must be extended to encompass the removed event.

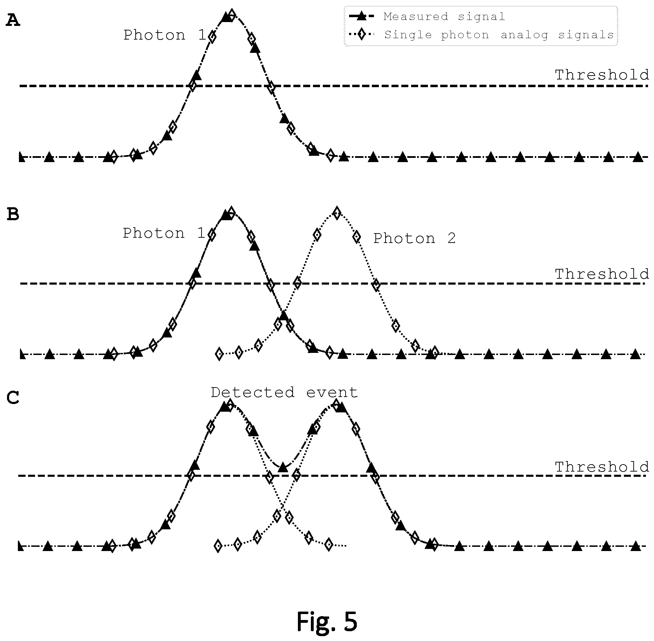

Figure 5 demonstrates the advantage of the concept of additional blind time (ABT): If the blind time of pulse 1 (A) is set to its pulse width, then pulse 2 should be detected (B). However, if pulse 2 is present, the measured analog signal does not go below the threshold and pulse 2 is not detected (C). Therefore, the blind time of pulse 1 is increased to account for this effect.

Figure 6 shows the histograms of the weights used in the BTC correction to calculate the relative time histograms, for different photon count rates.

Figure 7 depicts an electrical signal 12 comprising a detection event 13, the two standard TTTR parameters, 0 and 1, and five parameters, 2 to 6, that form extended information:

- 0: the number of the excitation event,

- 1: the relative time of the threshold crossing,

- 2: the maximum of the electrical signal 12 within a predefined duration from an upward threshold crossing time,

- 3: the width of the electrical pulse associated with a detection event 13 from a first time of crossing a threshold in an upward direction to a later second time of crossing the threshold in a downward direction,

- 4: the slope of the electrical signal 12 at an upward threshold crossing time,

- 5: the time between the excitation event and a secondary threshold crossing,

- 6: the area defined by the electrical signal within the detection event 13 within a predefined duration from an upward threshold crossing time.

Figure 8 demonstrates the different threshold crossing time measured for electrical pulses comprising one or more single photon responses for photons arriving essentially at the same time. While the theoretical relative times should be the same for all detected pulses, the measured ones, measured at threshold crossing, differ.

As shown in Figure 9, the method of the invention yields a distribution of relative times that closely resembles ground truth data (denoted by a circle). In this plot, the histogram denoted by a triangle (ABT+BTC) is obtained by the introduction of a blind time extension and by blind time corrections, whereas in the histogram denoted by a rectangle (ABT+BTC+RTC) all corrections, included the correction of relative times, are applied. The difference plot in the bottom shows that the sources of bias mentioned before have been nearly completely removed from the histogram denoted by a rectangle, leaving only the statistical variation as the main source of error. Comparing the difference curves for the uncorrected histogram (denoted by a rhombus) and the histogram denoted by a triangle illustrates that the majority of the distortion in intensity is generated by the blind time, whereas the temporal distortion is still present after applying the blind time correction.

Figure 10 visualizes a correction step in which all excitation cycles containing more than one photon are excluded from the analysis (Algorithm 3).

Furthermore, as can be recognized in Figure 11, the linearity of intensity is maintained. The crosses represent the count rate corresponding to the total counts reported in the corrected histogram when using the combined correction. The count rate of detection events that are used to compute the relative time histograms depends on the total blind time (BT) used.

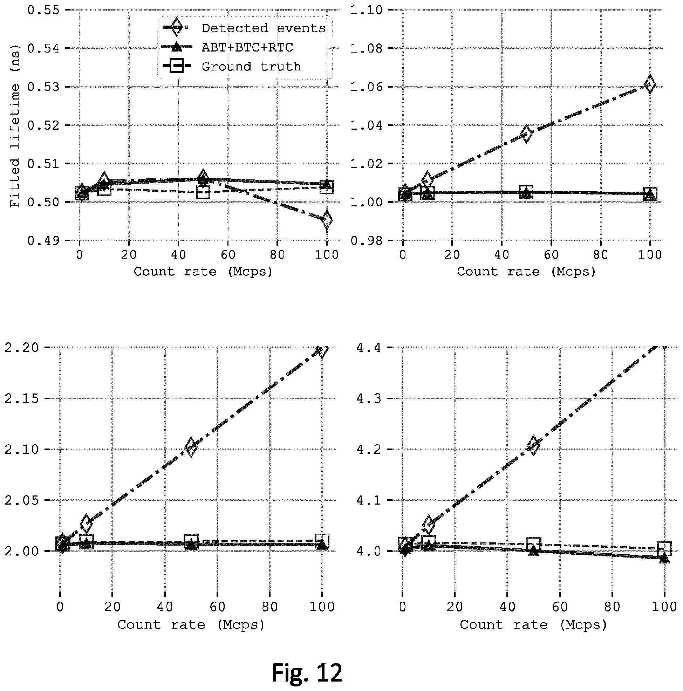

As visible in Figure 12, the lifetime estimate $\tau_i$ is virtually undistorted for all count rates evaluated. The four graphs were created from simulations of monoexponential decays corresponding to 0.5, 1, 2, and 4 ns lifetime, from left to right. The lifetime values were obtaining through exponential fitting.

**Claims**

1. A method for performing time-correlated single photon counting measurements, the method comprising the steps of

   a) exciting a sample (10) by a plurality of successive excitation events, (11),
   b) detecting the generated radiation, thereby generating an electrical signal (12), out of which at least one detection event (13) is generated, each detection event (13) comprising at least one electrical pulse indicative of at least one photon originating from the sample (10) and having a measured relative time ($t_p$),

c) providing extended information for at least one of said detection events (13), preferably for each of said detection events (13), the extended information being representative of at least one of the size and shape of the electrical pulse within the detection event (13), and

d) generating a distribution of relative times reflecting one or more properties of the sample (10) based on at least one detection event (13) and said extended information,

wherein

- at least one detection event (13) is disregarded based on the measured absolute time, relative time ($t_p$), and/or extended information associated with one or more of the detection events (13) within a domain of interest (DOI), and/or

- a corrected relative time ( $t'_p$ ) is assigned to at least one detection event (13) which is based on the measured relative time ($t_p$) of the detection event (13) and on the extended information associated with the respective detection event (13), and/or

- a weight factor (w(t)) is assigned to at least one detection event (13) which is based on the measured relative time ($t_p$) of the detection event (13) and on the extended information associated with a plurality, in particular all, detected detection events (13) within a domain of interest (DOI).

2. The method as claimed in claim 1,
wherein the method comprises at least one step in which distortions arising from deviations of an electrical pulse generated by the detection of a single photon from an imaginary perfect square pulse are corrected.

3. The method as claimed in claim 2,

wherein by iteration over at least one, in particular all, $N$ detection events $p \in \mathcal{P} = \{p_1, ..., p_N\}$ within the domain of interest, a subset $\mathcal{P}' = \{p'_1, ..., p'_M\}$ of all detection events $\mathcal{P}$ is determined, and corrected blind times $BT_{p1}, ..., BT_{pM}$ are calculated by the following Algorithm 1:

$$j = 1$$

$$p'_j = p_1$$

$$BT_{p'_j} = PW_{p_1} + BTE$$

For all $i \in [2, N]$:

If $T_{p_i} < T_{p'_j} + BT_{p'_j}$:

Set $BT_{p'_j}$ to $T_{p_i} + PW_{p_i} + BTE - T_{p'_j}$

Else:

Add 1 to $j$

$$p'_j = p_i$$

$$BT_{p'_j} = PW_{p_i} + BTE$$

4. The method as claimed in one of claims 2 and 3,
wherein the method comprises at least one step in which distortions arising from a photon pile-up are corrected.

5. The method as claimed in claim 4,

wherein for each discrete relative time bin $t_i$, $i \in [1, N_{bins}]$, a blind time compensation weight (w(t)) is calculated as

$$w(t) = \frac{N_{\text{total}}}{N_{\text{total}} - N_{\text{dead}}(t)},$$

wherein $N_{\text{total}}$ is the total number of excitations cycles within a domain of interest (DOI) and $N_{\text{dead}}(t)$ is the number of excitation cycles within the domain of interest (DOI) where the relative time (t) was within a blind time period $BT_p$.

6. The method as claimed in any of claims 4 and 5,

   wherein for each detection event $p_i \in \mathcal{P}'$, a corrected relative time $t'_{p_i}$ is calculated as

   $$t'_{p_i} = t_{p_i} + f_{\text{RTC}}(p_i),$$

   wherein $f_{\text{RTC}}(p_i)$ is a correction that depends on at least one pulse parameter, in particular at least one pulse parameter of the electric signal selected from the group consisting of

   - a width of the electrical pulse associated with the detection event (13) from a first time of crossing a threshold in a first direction to a later second time of crossing the threshold in an opposite second direction,
   - a slope of the electrical signal (12) at a first time of crossing a threshold in a first direction within the detection event (13),
   - a slope of the electrical signal (12) at a later second time of crossing the threshold in an opposite second direction within the detection event (13),
   - a maximum or minimum of the electrical signal (12) at a time associated with the detection event (13),
   - a maximum or minimum of the electrical signal (12) within a predefined duration from a threshold crossing,
   - an area defined by the electrical signal (12) at a time interval associated with the detection event (13) within a predefined duration from a threshold crossing, and
   - any number of voltage values at predefined time intervals before and/or after a threshold crossing time within the detection event (13), at least one, in particular a plurality of values of the electrical signal at predefined time intervals before and/or after a threshold crossing,
   - at least one, in particular a plurality of, crossing times and/or widths determined at a secondary threshold level within the detection event (13),
   - a time between an excitation event and a secondary threshold crossing within the detection event (13).

7. The method as claimed in claim 6,
   wherein

   $$f_{\text{RTC}}(p_i) = f_{\text{RTC,H}}(p_i) = c_{\text{h}} \cdot \left( H_{p_i} - V_{\text{thresh}} \right)$$

   is used as correction function,
   wherein $c_{\text{h}}$ is a predefined correction constant, $H_{\text{pi}}$ is a pulse height, and $V_{\text{thresh}}$ is a predefined threshold voltage.

8. The method as claimed in claim 6,
   wherein

   $$f_{RTC,H}(p_i, \Delta t) = c_h(\Delta t) \cdot \left( V_{p_i}(t_{thresh} + \Delta t) - V_{thresh} \right)$$

   is used as correction function.

9. The method as claimed in claim 6, wherein

$$f_{RTC,A}\left(p_i, \Delta t\right) = c_A \cdot \left( \sum_{t=0}^{\Delta t} \left( V_{p_i}(t_{thresh} + t) - V_{thresh} \right) \right)$$

is used as correction function.

**10.** The method as claimed in any of the previous claims, wherein a histogram of the distribution of relative times is calculated as follows:

```
Algorithm 2a
```

Initialize the temporal dis-
tribution $d$ at 0 for all $t$

for all photon events $p_i$ in $P'$:

Increment $d\left(t_p'\right)$ by $w\left(t_p\right)$

**11.** The method as claimed in any of the previous claims, wherein a histogram of the distribution of relative times is calculated as follows:

```
Algorithm 2b
```

Initialize the temporal dis-
tribution $d$ at 0 for all $t$

for all photon events $p$ in $P'$:

Increment $d\left(t_p'\right)$ by $w\left(t_p'\right)$

**12.** The method as claimed in any of the previous claims,

wherein distortions of the distribution arising from a photon pile-up and/or from deviations of a detection event generated by the detection of a single photon from an imaginary perfect square pulse are corrected by iteration over at least one, in particular all, $N$ detection events $p \in P = \{p_1,...,p_N\}$ within the domain of interest, a subset $P' = \{p'_1, ..., p'_M\}$ of all detection events $P$ being determined by selecting only events that correspond to an excitation period where only a single photon reached the detector, the selection being performed by applying Algorithm 3:

$$C_k = 0 \ \forall \ k \in [1, N_{total}]$$

```
For all i ∈ [1, N]:
```

$$k = n_{p_i}$$

```
Increase Cₖ by 1
```

```
For all i ∈ [1, N]:
```

$$k = n_{p_i}$$

```
If Cₖ = 1 and PWₚᵢ < PWL:
```

$$p'_j = p_i$$

```
Add 1 to j
```

a temporal distribution histogram being computed as a standard histogram for all events in $P'$
$N_{total}$ being the total number of excitations cycles within a domain of interest DOI,
$n_{pi} \in [1, N_{total}]$ being the index of the excitation cycle in which detection event $p_i$ was recorded,
$PWL$ being a predetermined parameter that specifies the maximum pulse width for a detection event to be classified as a single photon response and
$C_k$ resulting as a list of number of detection events for each excitation cycle.

13. The method as claimed in any of the previous claims, wherein the BTE and/or the correction function is determined on the basis of calibration data.

14. A system (50), in particular for carrying out the method as claimed in any of the previous claims, the system comprising

   - at least one excitation source, in particular a laser, for exciting a sample (10),
   - preferably excitation and detection optics,
   - at least one detector for detecting the radiation originating from the sample (10) and generating an electrical signal (12), out of which at least one detection event (13) is generated, each detection event (13) comprising at least one electrical pulse being indicative of at least one photon originating from the sample (10) and having a measured relative time ($t_p$),
   - at least one first computation unit for providing extended information for at least one of said detection events, preferably for each of said detection events (13), the extended information being representative of at least one of the size and shape of the electrical pulse within the detection event,
   - at least one second computation unit for generating a distribution of relative times reflecting one or more properties of the sample based on at least one detection event and said extended information,

   the first and/or the second computation unit

   - assigning a corrected relative time to at least one detection event which is based on the measured relative time of the detection event (13) and on the extended information associated with the respective detection event (13), and/or
   - assigning a weight factor ($w(t)$) to at least one detection event (13) which is based on the measured relative time ($t_p$) of the detection event (13) and on the extended information associated with a plurality, in particular all, detected detection events (13) within a domain of interest (DOI).

**Fig. 1**

**Fig. 2**

Fig. 3

Fig. 4

Fig. 5

Fig. 6

Fig. 7

Fig. 8

Fig. 9

**Fig. 10**

**Fig. 11**

**Fig. 12**

Europäisches
Patentamt
European
Patent Office
Office européen
des brevets

# EUROPEAN SEARCH REPORT

**Application Number**

EP 24 20 5032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEBASTIAN ISBANER ET AL: "Dead-time correction of fluorescence lifetime measurements and fluorescence lifetime imaging", OPTICS EXPRESS, vol. 24, no. 9, 21 April 2016 (2016-04-21), pages 9429-9445, XP055396466, DOI: 10.1364/OE.24.009429 * page 9429 - page 9438 * | 1-14 | INV. G01N21/64 |
| A | EP 3 431 967 A1 (PICOQUANT INNOVATIONS GMBH [DE]) 23 January 2019 (2019-01-23) * paragraphs [0001] - [0010], [0024] - [0027], [0056] - [0064], [0073] - [0079] * | 1-14 | |

**TECHNICAL FIELDS SEARCHED (IPC)**

G01N
G01J

The present search report has been drawn up for all claims

| Place of search | Date of completion of the search | Examiner |
|---|---|---|
| Munich | 20 March 2025 | Hoogen, Ricarda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5032

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | Publication date |
|---|---|---|---|
| EP 3431967 A1 | 23-01-2019 | NONE | |

For more details about this annex : see Official Journal of the European Patent Office, No. 12/82

EPO FORM P0459